# EUROPEAN PATENT SPECIFICATION

(11) **EP 2 830 728 B1**
(45) Date of publication and mention of the grant of the patent: **04.11.2020**
(21) Application number: 13717303.5
(22) Date of filing: 13.03.2013
(51) Int. Cl.: A63B 24/00, G06F 3/01, A63F 13/00

(54) **ENTERTAINMENT SYSTEM AND METHOD OF PROVIDING ENTERTAINMENT**
UNTERHALTUNGSSYSTEM UND VERFAHREN ZUM VERMITTELN VON UNTERHALTUNG
SYSTEME DE DIVERTISSEMENT ET PROCEDE POUR PROCURER UN DIVERTISSEMENT

(30) Priority: 29.03.2012 US 201213433973
(43) Date of publication of application: 04.02.2015
(73) Proprietor: Playoke GmbH, 1010 Vienna (AT)
(72) Inventor: BEYR, Markus, 4600 Schleissheim (AT); BOEDDINGHAUS, Jona, 79106 Freiburg (DE); BLASIUS, Dominic, 79102 Freiburg (DE); SUSDORF, Artur, 79112 Freiburg (DE)
(74) Representative: Keschmann, Marc
(86) International application number: PCT/IB2013/000370
(87) International publication number: WO 2013/144697

(56) References cited:
- WO-A1-2008/106197
- US-A1- 2006 063 645
- US-A1- 2007 167 240
- US-A1- 2007 190 506
- US-A1- 2010 197 399
- US-A1- 2010 285 877
- US-A1- 2011 225 498
- US-A1- 2012 019 643
- Alaina Lee: "Dance Central 2 review", , 11 October 2011 (2011-10-11), XP7922033, Retrieved from the Internet: URL:http://www.oxmonline.com/dance-central -2-review [retrieved on 2013-06-27]
- "Kinect", INTERNET CITATION, 29 November 2011 (2011-11-29), pages 1-18, XP002664941, Retrieved from the Internet: URL:http://en.wikipedia.org/wiki/Kinect [retrieved on 2011-12-01]
- ZHENGYOU ZHANG: "Microsoft Kinect Sensor and Its Effect", IEEE MULTIMEDIA, IEEE SERVICE CENTER, NEW YORK, NY, US, vol. 19, no. 2, 1 February 2012 (2012-02-01), pages 4-10, XP011442655, ISSN: 1070-986X, DOI: 10.1109/MMUL.2012.24
- TAKEUCHI T ET AL: "PRIMA: parallel reality-based interactive motion area", PROCEEDINGS OF ACM SIGGRAPH 2011; PROCEEDINGS OF SIGGRAPH POSTERS, HOPPE, HUGUES, VANCOUVER, CANADA; VANCOUVER, BC, CANADA, 1 January 2011 (2011-01-01), page 80, XP008163081,

## Description

The invention refers to an electronic entertainment system and to a method of providing entertainment.

In recent times video games that use motion tracking input devices have become popular. These input devices enable users to control and interact with the game console without the need to touch a game controller, through a natural user interface using gestures. The respective software is able to interpret specific gestures, making completely hands-free control of electronic devices possible by using an infrared projector and a video camera. By using a special microchip it is possible to track the movement of objects and individuals in three dimensions. Motion tracking input devices are commercialized under the trademarks Kinect™ (for Microsoft's Xbox 360) and PlayStation Eye (for Sony's Playstation 3).

Dance Central is a music video game for the Xbox 360 that uses the Kinect™ motion peripheral. The gameplay involves the player performing given dance moves, which are tracked by Kinect™ and represented on the screen by an avatar.

Conventional motion tracking input devices such as Kinect™ are configured to be connected to a gaming console or a personal computer. It is reported that Kinect™ is capable of simultaneously tracking only up to two active players for motion analysis with a feature extraction of 20 joints per player. The number of people the device can see is further limited by how many will fit in the field-of-view of the device's camera. The number of people the device can track simultaneously is further limited by the maximum data transfer rate and the maximum calculating capacity of the input device or the computer hardware to which it is connected. In particular, it has to be noted that motion tracking usually requires a motion analysis comprising a feature extraction of a plurality of characteristic body parts per player in order to obtain user body motion tracking data of said player(s), which is a computationally intensive task.

Alaina Lee: "Dance Central 2 review",, 11 October 2011 discloses an entertainment system, comprising a client computer, a 3D scanner connected to the client computer, and an electronic video display device, the 3D scanner being configured to continuously capture 3D data of at least one player and to transmit said 3D data to the client computer, each client computer comprising data processing means for subjecting said 3D data to a motion analysis comprising a feature extraction of a plurality of characteristic body parts per player thereby obtaining user body motion tracking data of said at least one player, each client computer further comprising sending means, wherein said 3D scanner is configured to capture a sequence of frames containing 3D data of at least one player, wherein said data processing means of said client computer is configured to separately subject each frame of 3D data to said motion analysis thereby obtaining a data set of user body motion tracking data for each frame. There is a need for providing motion tracking functionality for entertainment purposes making it possible to simultaneously track a larger number of players. In particular, the system should be capable of simultaneously tracking at least 8, preferably at least 16, more preferably at least 32 players. While conventional motion tracking input devices are mostly used in a private environment only, the simultaneous tracking of a higher number of players would allow to use the motion tracking systems in public spaces, such as in entertainment parks, amusement halls, fitness centers etc.

The instant invention aims at providing an entertainment system and a method of providing entertainment that allows the simultaneous motion tracking of at least 4 players. The entertainment system shall be easy to set up and inexpensive. In particular, the entertainment system shall not require any large-capacity computer or mainframe computer, but shall work on standard personal computers.

The object of the invention is achieved by claims 1 and 6. Advantageous features are disclosed in the dependent claims.

The invention provides for a system that is scalable to a large number of 3D scanners and an accordingly large number of players. Capturing and analyzing 3D data provided by a 3D scanner is computationally intensive. Therefore, a personal computer is usually capable of handling only a limited number of 3D scanners, such as a maximum of four scanners. A further limiting factor is the (PCI)-Bus used for peripheral devices, such as the 3D scanners. In addition, computational power is needed for synchronizing the motion tracking data of each player with reference data in order to analyze how close the player's movements match with the reference data. According to the invention, a client-server system is proposed in which the computationally intensive tasks are distributed according to the following principle. The capturing and analysis of 3D data provided by the 3D scanners is performed in the client computers in order to obtain motion tracking data for each player. The synchronization of all player's motion tracking data with reference data and the comparing step in order to obtain matching quality data is performed in the server computer. The number of client computers needed depends on the number of 3D scanners required, which in turn depends on the number of players. Usually the maximum possible number of 3D scanners per client computer is four.

The term 3D scanner generally refers to a hardware component that is capable of capturing 3D data of a moving body. Preferably, the 3D scanner comprises an infrared projector and a camera. The infrared projector preferably collects distance information about surfaces within its field of view. The picture produced by the infrared projector describes the distance to a surface at each point in the picture. This allows the three dimensional position of each point in the picture to be identified. Preferably the 3D scanner has a frame rate of > 15 frames per second, more preferably a frame rate of 30 frames per second.

The 3D data obtained by the 3D scanner preferably is a digital image as captured by the camera, such as a raster image consisting of a plurality of pixels, wherein each pixel contains color information as obtained by a grayscale or a color camera and wherein distance information as obtained by the infrared projector is assigned to each pixel.

The 3D scanner can be connected to the client computer by USB or other high-speed bus type connection.

The term motion analysis refers to the processing of the 3D data by the use of algorithms in order to detect specific body parts of the player. The motion analysis comprises feature extraction of characteristic body parts of the player. Feature extraction is a mathematical procedure, which results in a transformation of the 3D data into a reduced representation set of features, namely the specific body parts, such as torso, head, left hand, right hand, right hip, left hip, etc). Preferably, up to 15 body parts are detected and their coordinates identified.

The system can be used for any kind of entertainment or exercise that involves a specific course of motions of human body parts, such as dancing, physical exercise, fitness training, aerobic etc. The motion tracking data of the players are compared with the motion tracking data of a reference person, such as a teacher, in order to determine any deviations. The goal of the game for each player is to achieve a synchronization of his movements with those of the reference person. The reference person can either be displayed on the video display device or a person that is dancing or exercising in real time. By comparing the user body motion tracking data from each player with reference body motion tracking data the server computer obtains matching quality data, which are representative of the player's degree of conformity with the reference person's movements.

According to a preferred embodiment said 3D scanner is configured to capture a sequence of frames containing 3D data of at least one player.

According to a preferred embodiment said data processing means of said client computer is configured to separately subject each frame of 3D data to said motion analysis thereby obtaining a data set of user body motion tracking data for each frame.

According to a preferred embodiment said client computer comprises a clock that creates a timestamp each time a frame of 3D data is captured and is configured to add said time stamp to the corresponding data set.

According to a preferred embodiment said sending means are configured to separately send each data set of user body motion tracking data to the server computer as a data packet.

According to a preferred embodiment said sending means are configured to send each data packet by using the User Datagram Protocol (UDP). Using UDP results in a very quick transfer of the data packets, although it does not guarantee the completeness of the transmitted data and the correct sequence of the data packets.

According to a preferred embodiment said reference body motion tracking data comprise a plurality of data sets, each comprising reference body motion tracking data and a time stamp.

According to a preferred embodiment said processing means of said server computer is configured to synchronize said data sets of user body motion tracking data with said data sets of reference body motion tracking data by using the time stamps contained in each data set.

According to a preferred embodiment said processing means of said server computer is configured to transform, normalize, filter and/or scale said user body motion tracking data.

According to a preferred embodiment said system further comprises means for generating said reference body motion tracking data in real-time, including a further 3D scanner being configured to capture 3D data of a reference player, processing means for subjecting said 3D data to a motion analysis comprising a feature extraction of a plurality of characteristic body parts of said reference player thereby obtaining said reference body motion tracking data.

According to a preferred embodiment the server computer further comprises a scoring engine for generating a player score based on said matching quality data.

According to a preferred embodiment the 3D scanners are arranged in an array of at least three rows and at least three columns.

According to a preferred embodiment the 3D scanners each comprise a digital video camera and a depth sensor, the depth sensor adding depth information to each pixel of the digital image obtained by the video camera.

According to a preferred embodiment the 3D scanners are positioned above and in front of each player, the optical axis of the device being oriented at an angle of 30 - 60° with a horizontal plane.

According to a preferred embodiment the sensing range of the depth sensor is adjusted such that neighboring depth sensors do not interfere.

According to a preferred embodiment neighboring 3D scanners have an angular field of view such that their fields of view do not overlap each other.

To solve the objects underlying the instant invention a second aspect of the invention refers to a method for providing entertainment, the method comprising providing
a server computer,
a plurality of client computers each connected to the server computer via a data communication network,
a plurality of 3D scanners connected to each client computer, and
an electronic video display device,
each 3D scanner capturing 3D data of at least one player and transmitting said 3D data to the client computer,
subjecting said 3D data to a motion analysis, said motion analysis being performed in each client computer and comprising a feature extraction of a plurality of characteristic body parts per player thereby obtaining user body motion tracking data of said at least one player,
continuously sending said user body motion tracking data of each player from each client computer to the server computer,
continuously receiving said user body motion tracking data in the server computer from said plurality of client computers,
comparing said user body motion tracking data from each player with reference body motion tracking data, thereby obtaining matching quality data for each player,
displaying said matching quality data on an electronic video display device connected to said server computer.

Preferred embodiments of the method are described in the sub claims and will become apparent from the description of the accompanying drawings.

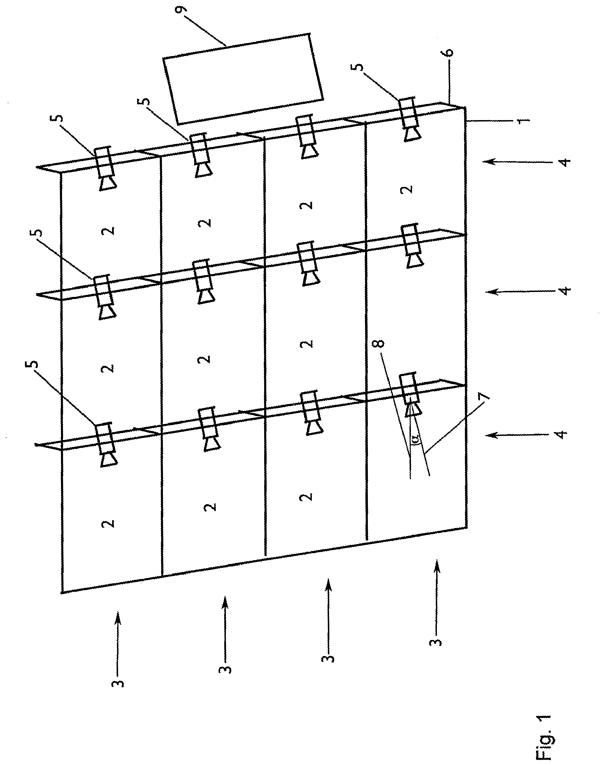

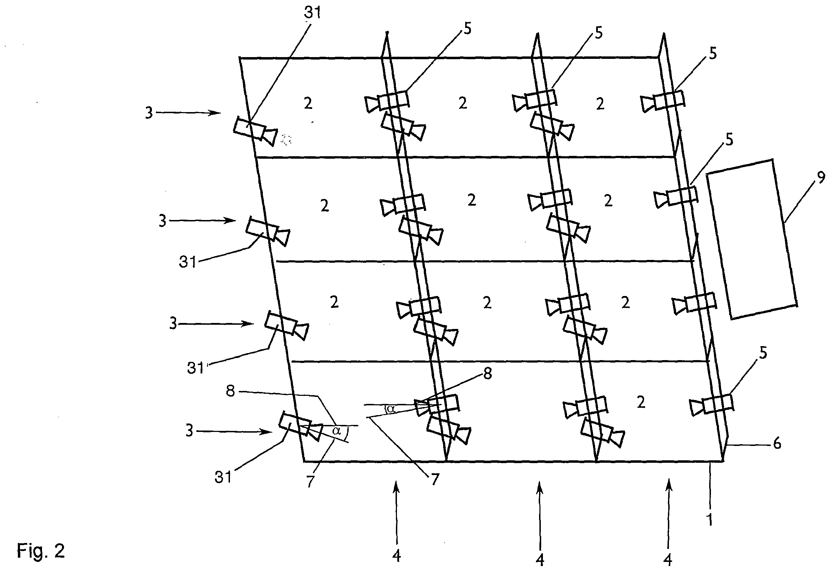

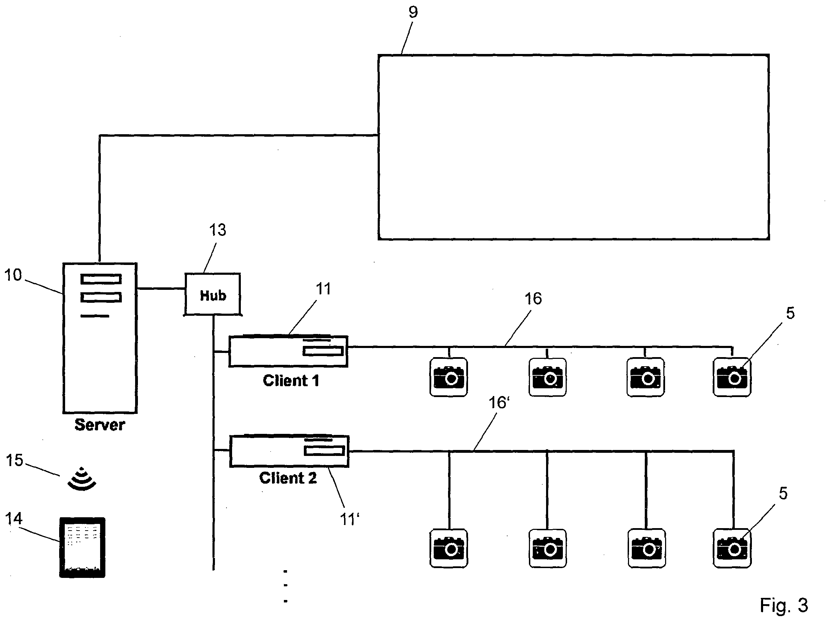

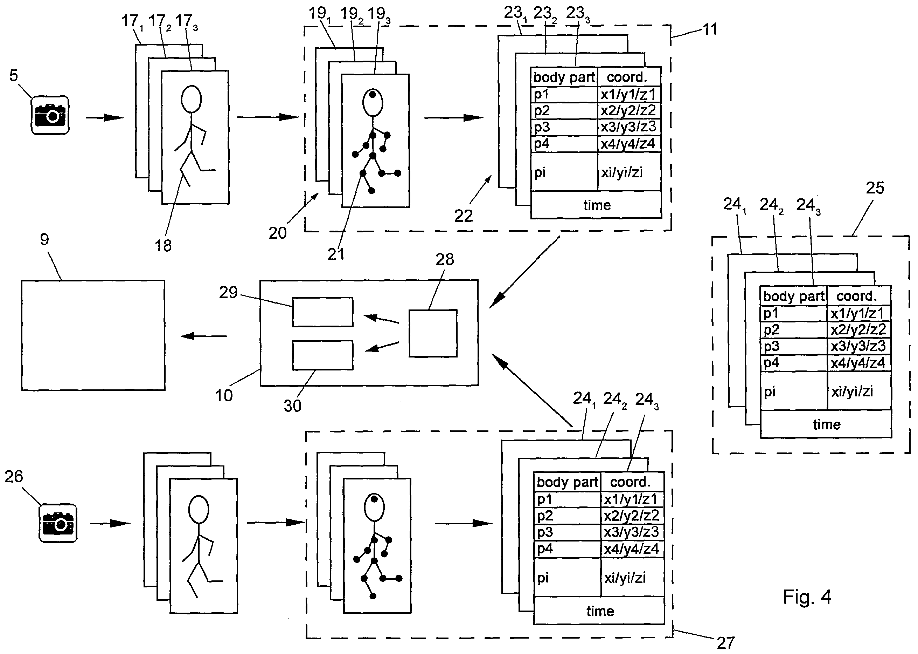

The invention will now be further explained with reference to the drawings. Therein, Fig. 1 illustrates an entertainment system for a multitude of players with a 3D scanner assigned to each player, Fig. 2 illustrates an entertainment system for a multitude of players with two 3D scanners assigned to each player, Fig. 3 illustrates the system layout of the system shown in Fig. 1 and Fig. 4 is a block diagram of the inventive method.

Fig. 1 shows an entertainment system comprising a player area 1 comprising an array of fields 2. The fields are arranged in four columns 3 and three rows 4, so that there is a total amount of twelve fields 2. There is one field for each player, so that in the embodiment shown in Fig. 1 the maximum number of players is twelve. There is a 3D scanner 5 assigned to each field 2. The 3D scanners are mounted on a supporting structure 6. The supporting structure may be fixed on the ceiling of a room or may be supported on the ground as shown in Fig. 1. In the embodiment shown in Fig.1 the supporting structure takes the form of a portal-like construction with posts carrying a beam on which the 3D scanners are mounted. The 3D scanners are mounted so that their optical axes 7 are oriented at an angle (α) of 30 - 60° with a horizontal plane 8. Preferably, the 3D scanners are mounted at such a height that the players can move around below the supporting structure without any obstacle.

The entertainment system further comprises an electronic video display device 9, which is arranged to be visible to each player while standing in his field 2.

The entertainment system can be located in an entertainment park, in a fitness center or in a private location.

The entertainment system shown in Fig. 2 is similar to the system of Fig. 1 with the exception that two 3D scanners are assigned to each field 2, namely a first 3D scanner 5 and a second 3D scanner 31. The first 3D scanner is arranged as the 3D scanners of Fig. 1, for example with their optical axes 7 being oriented at an angle (α) of 30 - 60° with a horizontal plane 8. The second 3D scanners 31 are arranged with their optical axis 7 being inclined. Preferably the optical axis 7 of the 3D scanners is oriented at an angle (α) of 30 - 60° with a horizontal plane 8. The 3D scanners 5 are arranged to scan the player from the front; the 3D scanners 31 are arranged to scan the player from the behind. Alternatively, the optical axis 7 of the 3D scanners 31 may be vertically directed to the floor of field 2.

The hardware components of the entertainment system are illustrated in Fig. 3. The system comprises a server computer 10, to which a number of client computers 11, 11' etc. are connected by way of a computer network 12 comprising a hub 13. The clients 11, 11' and the server computer 10 are configured to communicate to each other by using the IP protocol or any other standard protocol. Four 3D scanners 5 are connected to each client 11, 11' by using a standard bus-type connection 16, 16', such as, e.g., USB. The server computer 10 is connected to an electronic display device 9, such as a LCD screen. Further, a mobile device 14 can be used to exchange data with the server computer 10 by using a wireless connection 15.

In Fig. 4 the 3D scanner is again denoted by 5. In Fig. 4 only one 3D scanner is illustrated. The following description, however, refers to each 3D scanner 5 shown in Fig. 3. Each 3D scanner 5 captures a 3D image of the player standing in his field of view. In particular, the 3D scanner 5 captures a sequence of frames 17₁, 17₂, 17₃ ... 17ᵢ containing 3D data 18 of at least one player. The 3D data 18 comprises a grayscale or color image comprising an array of image pixels each having a grayscale or color information, wherein each pixel is assigned an image depth information captured by an infrared projector included in the 3D scanner 5. The sequence of frames 17₁, 17₂, 17₃ ... 17ᵢ taken by the 3D scanner 5 is continuously transmitted to the client computer 11. The client computer 11 comprises data processing means for subjecting the 3D data contained in each frame to a motion analysis, which comprises a feature extraction 20 of a plurality of characteristic body parts per player. Each frame is separately subjected to said feature extraction 20 resulting in a sequence of frames 19₁, 19₂, 19₃ ... 19ᵢ each containing an identification of extracted features 21, namely characteristic body parts, such as, e.g., torso, head, left hand, right hand, right hip, left hip, right knee, left knee, right elbow, left elbow etc. The extracted features 21 of each frame 19₁, 19₂, 19₃ ... 19ᵢ are transformed into user body motion tracking data 22 of said at least one player. The transformation is performed such that a separate data set 23₁, 23₂, 23₃ ... 23ᵢ is obtained from each frame 19₁, 19₂, 19₃ ... 19ᵢ. Each data set 23₁, 23₂, 23₃ ... 23ᵢ contains coordinates assigned to each body part that has been extracted during feature extraction 20. In particular, the data set contains a listing of the body parts (p1, p2, p3, ... pi) and the coordinates (x1/y1/z1, x2/y2/z2, x3/y3/z3, ... xi/yi/zi) of each body part, the coordinates representing the position of the body respective part within the image taken by the 3D scanner. The coordinates are 3-dimensional coordinates. In addition, each data set contains a time stamp representing the time at which the corresponding image was captured.

The data sets are transformed into data packages and transmitted to the server computer 10. The transmission is performed by using UDP, which is faster than TCP. Each data set is transmitted separately so that up to 30 data packets have to be sent per second in case the 3D scanner has a frame rate of 30 frames per second.

The server computer 10 not only receives data sets 23₁, 23₂, 23₃ ... 23ᵢ representing user body motion tracking data, but also data sets 24₁, 24₂, 24₃ ... 24ᵢ representing reference body motion tracking data. The reference body motion tracking data can be loaded onto the server computer 10 from a data carrier 25 and stored in the server computer for later use (playback mode). In playback use the server computer 10 processes the reference body motion tracking data according to a defined frame rate and feeds the stored data sets 24₁, 24₂, 24₃ ... 24ᵢ to an animation engine that generates a moving body image, which can be displayed on the electronic display device 9 as an avatar.

Alternatively, the reference body motion tracking data can be generated and transmitted in real time (live mode) by using a further 3D scanner 26 and a further client computer 27, whereby the procedure is the same as explained with reference to 3D scanner 5 and client computer 11. The 3D scanner 26 captures the movements of a reference user, such as an instructor, and the 3D scanners 5 capture the movements of the plurality of players, the players' task being to synchronize their movements with the instructor's real time movements as good as possible.

In order to facilitate synchronization, the instructor's movements can be synchronized with music. The instructor can be located in the same room as the players, but can also be located remotely, such as in a different city or country. In the latter case, client computer 27 is connected to server computer 10 via an internet connection.

In the live mode, the server computer 10 continuously receives reference body motion tracking data from client computer 27 and temporarily stores the data in a processing unit 28, where said user body motion tracking data from each player is compared with reference body motion tracking data, thereby obtaining matching quality data for each player. The processing unit 28 synchronizes said data sets 23₁, 23₂, 23₃ ... 23ᵢ representing user body motion tracking data with the data sets 24₁, 24₂, 24₃ ... 24ᵢ representing reference body motion tracking data by using the time stamps contained in each data set. The synchronizing step comprises sorting at least part of the data sets 23₁, 23₂, 23₃ ... 23ᵢ such that they match with the chronologically arranged time stamps of the data sets 24₁, 24₂, 24₃ ... 24ᵢ. The comparing step comprises comparing the coordinates assigned to the body parts in data sets with matching time stamps and identifying how close the coordinates match. The comparing step may optionally comprise comparing the coordinates assigned to the body parts in data sets that differ with regard to their time stamps according to a defined time tolerance value. The time tolerance value may be preselected, thereby offering the possibility of adjusting the level of difficulty.

Before synchronizing and comparing the data sets the user body motion data may optionally be subjected to transformation, normalization, filtering and/or scaling. These steps serve to compensate for circumstances that result in that the user body motion tracking data cannot be perfectly compared with the reference body motion tracking data. Such circumstances can lie in that the 3D scanners optical axis is arranged at an angle with the horizontal plane resulting in a distortion of the image captured by the 3D scanner. Other circumstances that influence the comparability of the user body motion tracking data are differences among the players and between the players and the instructor in body height and in the body's proportions.

The server computer 10 optionally further comprises a scoring engine 29 for generating a player score based on the matching quality of the individual players. The player score may be displayed on the electronic display device 9, which is connected to the server computer 10. Further, an animation engine 30 may be provided that generates a moving body image based on the user body motion tracking data for displaying the players as moving avatars on the electronic display device 9.

## Claims

1. Entertainment system, comprising
a server computer,
a plurality of client computers each connected to the server computer via a data communication network,
a plurality of 3D scanners connected to each client computer, and
an electronic video display device,
each 3D scanner being configured to continuously capture 3D data of at least one player and to transmit said 3D data to the client computer,
each client computer comprising data processing means for subjecting said 3D data to a motion analysis comprising a feature extraction of a plurality of characteristic body parts per player thereby obtaining user body motion tracking data of said at least one player,
each client computer further comprising sending means for continuously sending said user body motion tracking data of each player to the server computer,
said server computer continuously receiving said user body motion tracking data from said plurality of client computers and comprising processing means for comparing said user body motion tracking data from each player with reference body motion tracking data, thereby obtaining matching quality data for each player,
said server computer being connected to said electronic video display device for displaying said matching quality data on said electronic video display device,
wherein said 3D scanner is configured to capture a sequence of frames containing 3D data of at least one player,
wherein said data processing means of said client computer is configured to separately subject each frame of 3D data to said motion analysis thereby obtaining a data set of user body motion tracking data for each frame,
wherein said client computer comprises a clock that creates a timestamp each time a frame of 3D data is captured and is configured to add said time stamp to the corresponding data set,
wherein said reference body motion tracking data comprise a plurality of data sets each comprising reference body motion tracking data and a time stamp, and
wherein said processing means of said server computer is configured to synchronize said data sets of user body motion tracking data with said data sets of reference body motion tracking data by using the time stamps contained in each data set.

2. Entertainment system according to claim 1, said system further comprising means for generating said reference body motion tracking data in real-time, including a further 3D scanner being configured to capture 3D data of a reference player, processing means for subjecting said 3D data to a motion analysis comprising a feature extraction of a plurality of characteristic body parts of said reference player thereby obtaining said reference body motion tracking data.

3. Entertainment system according to claim 1, wherein the 3D scanners are arranged in an array of at least three rows and at least three columns.

4. Entertainment system according to claim 1, wherein the 3D scanners each comprise a digital video camera and a depth sensor, the depth sensor adding depth information to each pixel of the digital image obtained by the video camera, wherein the sensing range of the depth sensor is preferably adjusted such that neighboring depth sensors do not interfere.

5. Entertainment system according to claim 1, wherein neighboring 3D scanners have an angular field of view such that their fields of view do not overlap each other.

6. Method of providing entertainment, comprising providing
a server computer,
a plurality of client computers each connected to the server computer via a data communication network,
a plurality of 3D scanners connected to each client computer, and
an electronic video display device,
each 3D scanner capturing 3D data of at least one player and transmitting said 3D data to the client computer,
subjecting said 3D data to a motion analysis, said motion analysis being performed in each client computer and comprising a feature extraction of a plurality of characteristic body parts per player thereby obtaining user body motion tracking data of said at least one player,
continuously sending said user body motion tracking data of each player from each client computer to the server computer,
continuously receiving said user body motion tracking data in the server computer from said plurality of client computers,
comparing said user body motion tracking data from each player with reference body motion tracking data, thereby obtaining matching quality data for each player,
displaying said matching quality data on an electronic video display device connected to said server computer,
wherein said capturing of 3D data comprises capturing a sequence of frames containing 3D data of at least one player, wherein preferably, each frame of 3D data is separately subjected to said motion analysis thereby obtaining a data set of user body motion tracking data for each frame,
further comprising creating a timestamp in a clock of said client computer each time a frame of 3D data is captured and adding said time stamp to the corresponding dataset,
wherein said reference body motion tracking data comprise a plurality of data sets each comprising reference body motion tracking data and a time stamp, wherein in said server computer said data sets of user body motion tracking data are synchronized with said data sets of reference body motion tracking data by using the time stamps contained in each data set.

7. Method according to claim 6, wherein said reference body motion tracking data are generated in real-time, including capturing 3D data of a reference player by using a further 3D scanner, subjecting said 3D data to a motion analysis comprising a feature extraction of a plurality of characteristic body parts of said reference player thereby obtaining said reference body motion tracking data.

8. Method according to claim 6, wherein the 3D scanners each comprise a digital video camera and a depth sensor, the depth sensor adding depth information to each pixel of the digital image obtained by the video camera, wherein the sensing range of the depth sensor is preferably adjusted such that neighboring depth sensors do not interfere.

## Patentansprüche

1. Unterhaltungssystem, umfassend
einen Server-Computer,
mehrere Client-Computer, die jeweils über ein Datenkommunikationsnetzwerk mit dem Server-Computer verbunden sind;
eine Vielzahl von 3D-Scannern, die mit dem jeweiligen Client-Computer verbunden sind, und
eine elektronische Videoanzeigevorrichtung,
wobei jeder 3D-Scanner so konfiguriert ist, dass er kontinuierlich 3D-Daten von mindestens einem Spieler erfasst und diese 3D-Daten an den Client-Computer überträgt,
wobei jeder Client-Computer Datenverarbeitungsmittel umfasst, um die 3D-Daten einer Bewegungsanalyse zu unterziehen, die eine Merkmalsextraktion einer Vielzahl charakteristischer Körperteile pro Spieler umfasst, wodurch Benutzerkörper-Bewegungsverfolgungsdaten des mindestens einen Spielers erhalten werden,
wobei jeder Client-Computer ferner Sendemittel zum kontinuierlichen Senden der Benutzerkörper-Bewegungsverfolgungsdaten jedes Spielers an den Server-Computer umfasst,
wobei der Server-Computer kontinuierlich die Benutzerkörper-Bewegungsverfolgungsdaten von den mehreren Client-Computern empfängt und Verarbeitungsmittel zum Vergleichen der Benutzerkörper-Bewegungsverfolgungsdaten jedes Spielers mit Referenzkörper-Bewegungsverfolgungsdaten umfasst, wodurch Übereinstimmungsqualitätsdaten für jeden Spieler erhalten werden,
wobei der Server-Computer mit der elektronischen Videoanzeigevorrichtung verbunden ist, um die Übereinstimmungsqualitätsdaten auf der elektronischen Videoanzeigevorrichtung anzuzeigen,
wobei der 3D-Scanner konfiguriert ist, um eine Folge von Frames zu erfassen, die 3D-Daten von mindestens einem Spieler enthalten,
wobei die Datenverarbeitungsmittel des Client-Computers so konfiguriert sind, dass jedes Frame von 3D-Daten separat der Bewegungsanalyse unterzogen wird, wodurch ein Datensatz von Benutzerkörper-Bewegungsverfolgungsdaten für jedes Frame erhalten wird,
wobei der Client-Computer eine Uhr umfasst, die jedes Mal einen Zeitstempel erzeugt, wenn ein Frame von 3D-Daten erfasst wird, und konfiguriert ist, um den Zeitstempel zu dem entsprechenden Datensatz hinzuzufügen,
wobei die Referenzkörper-Bewegungsverfolgungsdaten eine Vielzahl von Datensätzen umfassen, die jeweils Referenzkörper-Bewegungsverfolgungsdaten und einen Zeitstempel umfassen, und
wobei die Verarbeitungsmittel des Server-Computers konfiguriert sind, um die Datensätze von Benutzerkörper-Bewegungsverfolgungsdaten mit den Datensätzen von Referenzkörper-Bewegungsverfolgungsdaten unter Verwendung der in jedem Datensatz enthaltenen Zeitstempel zu synchronisieren.

2. Unterhaltungssystem nach Anspruch 1, wobei das System ferner Mittel zum Erzeugen der Referenzkörper-Bewegungsverfolgungsdaten in Echtzeit umfasst, einschließlich eines weiteren 3D-Scanners, der konfiguriert ist, um 3D-Daten eines Referenzspielers zu erfassen, Verarbeitungsmittel zum Unterwerfen der 3D-Daten einer Bewegungsanalyse, umfassend eine Merkmalsextraktion einer Vielzahl charakteristischer Körperteile des Referenzspielers, wodurch die Referenzkörper-Bewegungsverfolgungsdaten erhalten werden.

3. Unterhaltungssystem nach Anspruch 1, wobei die 3D-Scanner in einer Anordnung von mindestens drei Zeilen und mindestens drei Spalten angeordnet sind.

4. Unterhaltungssystem nach Anspruch 1, wobei die 3D-Scanner jeweils eine digitale Videokamera und einen Tiefensensor umfassen, wobei der Tiefensensor jedem Pixel des von der Videokamera erhaltenen digitalen Bildes Tiefeninformationen hinzufügt, wobei der Erfassungsbereich des Tiefensensors vorzugsweise so eingestellt ist, dass benachbarte Tiefensensoren nicht miteinander interferieren.

5. Unterhaltungssystem nach Anspruch 1, wobei benachbarte 3D-Scanner ein Winkelsichtfeld aufweisen, so dass sich ihre Sichtfelder nicht überlappen.

6. Verfahren zur Bereitstellung von Unterhaltung, einschließlich Bereitstellung
eines Server-Computers,
mehrerer Client-Computer, die jeweils über ein Datenkommunikationsnetzwerk mit dem Server-Computer verbunden sind;
einer Vielzahl von 3D-Scannern, die mit dem jeweiligen Client-Computer verbunden sind, und
einer elektronischen Videoanzeigevorrichtung,
wobei jeder 3D-Scanner 3D-Daten von mindestens einem Spieler erfasst und diese 3D-Daten an den Client-Computer überträgt,
Unterwerfen der 3D-Daten einer Bewegungsanalyse, wobei die Bewegungsanalyse in jedem Client-Computer durchgeführt wird und eine Merkmalsextraktion einer Vielzahl charakteristischer Körperteile pro Spieler umfasst, wodurch Benutzerkörper-Bewegungsverfolgungsdaten des mindestens einen Spielers erhalten werden,
kontinuierliches Senden der Benutzerkörper-Bewegungsverfolgungsdaten jedes Spielers von jedem Client-Computer an den Server-Computer;
kontinuierliches Empfangen der Benutzerkörper-Bewegungsverfolgungsdaten in dem Server-Computer von der Vielzahl von Client-Computern,
Vergleichen der Benutzerkörper-Bewegungsverfolgungsdaten jedes Spielers mit Referenzkörper-Bewegungsverfolgungsdaten, wodurch Übereinstimmungsqualitätsdaten für jeden Spieler erhalten werden;
Anzeigen der Übereinstimmungsqualitätsdaten auf einer elektronischen Videoanzeigevorrichtung, die mit dem Server-Computer verbunden ist,
wobei das Erfassen von 3D-Daten das Erfassen einer Folge von Frames umfasst, die 3D-Daten von mindestens einem Spieler enthalten, wobei vorzugsweise jedes Frame von 3D-Daten separat der Bewegungsanalyse unterzogen wird, wodurch ein Datensatz von Benutzerkörper-Bewegungsverfolgungsdaten für jedes Frame erhalten wird,
ferner umfassend das Erstellen eines Zeitstempels in einer Uhr des Client-Computers jedes Mal, wenn ein Frame von 3D-Daten erfasst wird, und Hinzufügen des Zeitstempels zu dem entsprechenden Datensatz,
wobei die Referenzkörper-Bewegungsverfolgungsdaten eine Vielzahl von Datensätzen umfassen, die jeweils Referenzkörper-Bewegungsverfolgungsdaten und einen Zeitstempel umfassen, wobei in dem Server-Computer die Datensätze von Benutzerkörper-Bewegungsverfolgungsdaten mit den Datensätzen der Referenzkörper-Bewegungsverfolgungsdaten unter Verwendung der in jedem Datensatz enthaltenen Zeitstempel synchronisiert werden.

7. Verfahren nach Anspruch 6, wobei die Referenzkörper-Bewegungsverfolgungsdaten in Echtzeit erzeugt werden, einschließlich des Erfassens von 3D-Daten eines Referenzspielers unter Verwendung eines weiteren 3D-Scanners, wobei die 3D-Daten einer Bewegungsanalyse unterzogen werden, die eine Merkmalsextraktion mehrerer charakteristischer Körperteile des Referenzspielers umfasst, wodurch die Referenzkörper-Bewegungsverfolgungsdaten erhalten werden.

8. Verfahren nach Anspruch 6, wobei die 3D-Scanner jeweils eine digitale Videokamera und einen Tiefensensor umfassen, wobei der Tiefensensor jedem Pixel des von der Videokamera erhaltenen digitalen Bildes Tiefeninformationen hinzufügt, wobei der Erfassungsbereich des Tiefensensors vorzugsweise so eingestellt wird, dass benachbarte Tiefensensoren nicht miteinander interferieren.

## Revendications

1. Système de divertissement, comprenant
un ordinateur serveur,
une pluralité d'ordinateurs clients, chacun étant connecté à l'ordinateur serveur via un réseau de communication de données,
une pluralité de scanners 3D connectés à chaque ordinateur client, et
un dispositif d'affichage vidéo électronique,
chaque scanner 3D étant configuré pour capturer en continu des données 3D d'au moins un joueur et pour transmettre lesdits données 3D à l'ordinateur client,
chaque ordinateur client comprenant des moyens de traitement de données pour soumettre lesdites données 3D à une analyse de mouvement comprenant une extraction d'attributs d'une pluralité de parties de corps caractéristiques pour chaque joueur, obtenant ainsi des données de suivi de mouvement de corps d'utilisateur dudit au moins un joueur,
chaque ordinateur client comprenant en outre des moyens d'envoi pour envoyer en continu lesdites données de suivi de mouvements de corps d'utilisateur de chaque joueur à l'ordinateur serveur,
ledit ordinateur serveur recevant en continu lesdites données de suivi de mouvement de corps d'utilisateur à partir de ladite pluralité d'ordinateurs clients et comprenant des moyens de traitement pour comparer lesdites données de suivi de mouvement de corps d'utilisateur de chaque joueur avec des données de suivi de mouvement de corps de référence, obtenant ainsi des données de qualité correspondantes pour chaque joueur,
ledit ordinateur serveur étant connecté audit dispositif d'affichage vidéo électronique pour afficher lesdites données de qualité correspondantes sur ledit dispositif d'affichage vidéo électronique,
dans lequel ledit scanner 3D est configuré pour capturer une séquence d'images contenant des données 3D d'au moins un joueur,
dans lequel ledit moyen de traitement de données dudit ordinateur client est configuré pour soumettre séparément chaque image de données 3D à ladite analyse de mouvement, obtenant ainsi un ensemble de données de suivi de mouvement de corps d'utilisateur pour chaque image,
dans lequel ledit ordinateur client comprend une horloge qui crée un horodatage à chaque fois qu'une trame de données 3D est capturée et est configuré pour ajouter ledit horodatage à l'ensemble de données correspondant,
dans lequel lesdites données de suivi de mouvement de corps de référence comprennent une pluralité d'ensembles de données comprenant chacun des données de suivi de mouvement de corps de référence et un horodatage, et
dans lequel ledit moyen de traitement dudit ordinateur serveur est configuré pour synchroniser lesdits ensembles de données de suivi de mouvement de corps d'utilisateur avec lesdits ensembles de données de suivi de mouvement de corps de référence en utilisant les horodatages contenues dans chaque ensemble de données.

2. Système de divertissement selon la revendication 1, ledit système comprenant en outre des moyens pour générer lesdites données de suivi de mouvements de corps de référence en temps réel, comprenant un autre scanner 3D configuré pour capturer des données 3D d'un joueur de référence, des moyens de traitement pour soumettre lesdites données 3D à une analyse de mouvement comprenant une extraction d'attributs d'une pluralité de parties de corps caractéristiques dudit joueur de référence, obtenant ainsi lesdites données de suivi de mouvement de corps de référence.

3. Système de divertissement selon la revendication 1, dans lequel les scanners 3D sont disposés dans un tableau d'au moins trois lignes et d'au moins trois colonnes.

4. Système de divertissement selon la revendication 1, dans lequel les scanners 3D comprennent chacun une caméra vidéo numérique et un capteur de profondeur, le capteur de profondeur ajoutant des informations de profondeur à chaque pixel de l'image numérique obtenue par la caméra vidéo, dans lequel la plage de détection du capteur de profondeur est de préférence ajustée de telle sorte que les capteurs de profondeur voisins n'interfèrent pas.

5. Système de divertissement selon la revendication 1, dans lequel des scanners 3D voisins ont un champ de vision angulaire tel que leurs champs de vision ne se chevauchent pas.

6. Procédé pour fournir du divertissement, comprend une étape consistant à fournir
un ordinateur serveur,
une pluralité d'ordinateurs clients, chacun étant connecté à l'ordinateur serveur via un réseau de communication de données,
une pluralité de scanners 3D connectés à chaque ordinateur client, et
un dispositif d'affichage vidéo électronique,
chaque scanner 3D saisissant les données 3D d'au moins un joueur et transmettant lesdites données 3D à l'ordinateur client,
soumettre lesdites données 3D à une analyse de mouvement, ladite analyse de mouvement étant effectuée dans chaque ordinateur client et comprenant une extraction d'attributs d'une pluralité de parties de corps caractéristiques pour chaque joueur, obtenant ainsi des données de suivi de mouvement de corps d'utilisateur dudit au moins un joueur,
envoyer en continu les données de suivi de mouvement de corps d'utilisateur de chaque joueur depuis chaque ordinateur client vers l'ordinateur serveur,
recevoir en continu lesdites données de suivi de mouvement de corps d'utilisateur dans l'ordinateur serveur à partir de ladite pluralité d'ordinateurs clients,
comparer lesdites données de suivi de mouvement de corps d'utilisateur de chaque joueur avec les données de suivi de mouvements de corps de référence, obtenant ainsi des données de qualité correspondantes pour chaque joueur,
afficher lesdites données de qualité correspondantes sur un dispositif d'affichage vidéo électronique connecté audit ordinateur serveur,
dans lequel ladite capture de données 3D comprend une capture d'une séquence d'images contenant des données 3D d'au moins un joueur,
dans lequel, de préférence, chaque image de données 3D est soumise séparément à ladite analyse de mouvement, obtenant ainsi un ensemble de données de suivi de mouvement de corps d'utilisateur pour chaque image,
comprenant en outre la création d'un horodatage dans une horloge dudit ordinateur client chaque fois qu'une image de données 3D est capturée et l'ajout dudit horodatage à l'ensemble de données correspondant,
dans lequel lesdites données de suivi de mouvement de corps de référence comprennent une pluralité d'ensembles de données comprenant chacun des données de suivi de mouvement de corps de référence et un horodatage, dans lequel, dans ledit ordinateur serveur, lesdits ensembles de données de données de suivi de mouvement de corps d'utilisateur sont synchronisés avec lesdits ensembles de données de suivi de mouvement de corps de référence en utilisant les horodatages contenus dans chaque ensemble de données.

7. Procédé selon la revendication 6, dans lequel lesdites données de suivi de mouvement de corps de référence sont générées en temps réel, comprenant la capture de données 3D d'un joueur de référence en utilisant un autre scanner 3D, la soumission desdites données 3D à une analyse de mouvement comprenant un extraction d'attributs d'une pluralité de parties de corps caractéristiques dudit joueur de référence, obtenant ainsi lesdites données de suivi de mouvement de corps de référence.

8. Procédé selon la revendication 6, dans lequel les scanners 3D comprennent chacun une caméra vidéo numérique et un capteur de profondeur, le capteur de profondeur ajoutant des informations de profondeur à chaque pixel de l'image numérique obtenue par la caméra vidéo, dans lequel la plage de détection du capteur de profondeur est de préférence ajustée de telle sorte que les capteurs de profondeur voisins n'interfèrent pas.
